# EUROPÄISCHE PATENTSCHRIFT

(11) **EP 0 410 266 B1**
(45) Veröffentlichungstag und Bekanntmachung des Hinweises auf die Patenterteilung: **30.11.1994**
(21) Anmeldenummer: 90113632.5
(22) Anmeldetag: 17.07.1990
(51) Int. Cl.: H04B 7/155, H04B 17/00

(54) **Schaltungsanordnung zur Durchschaltung eines digitalen Dienstkanals in einer Richtfunk-Zwischenstelle**
Circuit for switching a digital service channel of a radio relay
Circuit de commutation d'une voie numérique de service d'un relais radio

(30) Priorität: 22.07.1989 DE 3924283
(43) Veröffentlichungstag der Anmeldung: 30.01.1991
(73) Patentinhaber: Alcatel SEL Aktiengesellschaft, D-70435 Stuttgart (DE)
(72) Erfinder: Schreder, Wolfgang, D-7534 Birkenfeld (DE); Lüdecke, Rainer, D-7534 Birkenfeld (DE); Hotz, Peter, D-7543 Engelsbrand (DE)
(74) Vertreter: Pechhold, Eberhard, Dipl.-Phys.

(56) Entgegenhaltungen:
- EP-A- 0 085 940
- EP-A- 0 275 406
- DE-A- 2 920 370

## Beschreibung

In Zwischenstellen digital betriebener Richtfunkstrecken wird das zu übertragende Signal im Basisband oder in der ZF-Ebene übergeben. Dabei arbeiten der übergebende Empfänger und der übernehmende Sender entweder zueinander synchron oder plesiochron.

Während im synchronen Übergabeverfahren die Phasenbeziehung zwischen Sende- und Empfangstakt willkürlich ist, tritt im plesiochronen Betrieb von Sender und Empfänger eine Abweichung der Taktfrequenzen gegeneinander auf, die bis in die Größenordnung von ca. 10⁻⁵ gehen kann. Beide Erscheinungen führen zu Störungen bei der Durchschaltung digitaler Dienstkanäle, die in der Zwischenstelle zugänglich sein sollen und deshalb aus dem zu übertragenden Signal ausgefügt und wieder eingefügt werden.

Diese Störungen rühren daher, daß an Stellen, an denen eine für die Abtastung eines einlaufenden Dienstkanalsignals maßgebende Flanke (Steuerflanke) eines aus dem empfangenen Signal gewonnenen Empfangstaktes mit einer für die Wiederausgabe des Dienstkanalsignals maßgebenden Flanke (Steuerflanke) eines Sendetaktes zeitlich zusammenfällt, die Zuordnung der in das zu übertragende Signal einzufügenden Dienstkanalsignalbits zum Sendetakt nicht eindeutig ist.

Dieser Zustand tritt bei Synchronlauf von Sender und Empfänger und willkürlicher Phasenlage der Takte zueinander nach jedem neuen Einschalten mit einer gewissen Wahrscheinlichkeit auf. Bei plesiochronem Betrieb tritt er in jedem Falle, im Rhythmus der Differenzfrequenz der beiden Takte auf.

Diese Störungen zu vermeiden erforderte bisher besondere Anpassungsmaßnahmen, wie Zwischenschalten elastischer Speicher zur Einfügung von Stopfbits in den - oder Ausblendung von Datenbits aus dem zu übertragenden Pulsrahmen (siehe z.B. Druckschrift ANT 166903.87 der Fa. ANT Nachrichtentechnik GmbH, Seite 2, mittlere Spalte im Hinblick auf den Oberbegriff des Anspruchs 1).

Derartige Maßnahmen sind aufwendig und damit teuer und störungsanfällig.

EP-A- 0 275 406 offenbart ein Verfahren und eine Vorrichtung zur Rückgewinnung des Taktes und/oder der Taktphase eines synchronen oder plesiochronen Digitalsignals.

Der Erfindung liegt die Aufgabe zugrunde, eine einfache Schaltungsanordnung zur Durchverbindung digitaler Dienstkanäle in Richtfunk-Zwischenstellen zu schaffen.

Diese Aufgabe wird durch die im Patentanspruch 1 angegebenen Merkmale gelöst.

Mit der Schaltungsanordnung nach der Erfindung wird es möglich, durch künstlich herbeigeführten zeitlichen Versatz der vom Empfänger her einlaufenden Dienstkanalsignalbits an Stellen, an denen Steuerflanken des Empfangstaktes und des Sendetaktes zeitlich zusammenzufallen drohen, den oben beschriebenen unerwünschten Zustand auszuschließen. Durch den zeitlichen Versatz verursachte Bitfehler treten nur im plesiochronen Betrieb auf und ergeben eine Fehlerrate in der Größenordnung der Frequenzabweichung zwischen Sender- und Empfangstakt. Diese Fehlerrate ist bei den für Dienstkanäle üblicherweise geltenden Anforderungen an die Übertragungsqualität zu vernachlässigen.

Ausgestaltungen der Schaltungsanordnung nach der Erfindung sind in den Unteransprüchen wiedergegeben:

So sieht der Gegenstand des Patentanspruchs 2 einen Zwischenspeicher vor, an dem das empfangene Dienstkanalsignal mit dem Empfangstakt synchronisiert anliegt und aus dem es mit dem Sendetakt ausgegeben wird. Den zeitlichen Versatz besorgt ein Umschalter, der den als Rechtecksignal vorliegenden, für die Ausgabe des Dienstkanalsignals aus dem Zwischenspeicher maßgebenden Sendetakt invertiert, wenn ein Zusammenfallen der Steuerflanken von Empfangstakt und Sendetakt droht. Die für die Ausgabe der Dienstkanalsignalbits maßgebende Steuerflanke des Sendetaktes wird damit um 180° zeitlich verschoben und ein Zusammenfallen der Steuerflanken der Takte damit ausgeschlossen. Durch Einstellen der Schwelle des Schwellwertschalters kann ein kritischer Abstand der Takt-Steuerflanken voneinander eingestellt werden, bei dessen Unterschreiten ein Zusammenfallen der Steuerflanken unterstellt und der für die Ausgabe der Dienstkanalsignalbits maßgebende Takt invertiert wird.

Patentanspruch 3 betrifft eine Ausgestaltung der Schaltungsanordnung nach der Erfindung, bei der ein Umschalter das vom Empfänger kommende Dienstkanalsignal normalerweise direkt auf eine nachgeschaltete Synchronisierschaltung durchschaltet, bei drohendem zeitlichem Zusammenfallen der Steuerflanken des Empfangstaktes und des Sendetaktes aber auf einen zweiten, über einen Zwischenspeicher führenden, das Dienstkanalsignal verzögernden Signalweg umschaltet.

Patentanspruch 4 betrifft die Taktgewinnung für den das Dienstkanalsignal verzögernden Zwischenspeicher.

Gegenstand der Patentansprüche 5 und 6 sind die schaltungstechnische Realisierung des gemäß Patentanspruch 2 vorgesehenen Umschalters und die Nachschaltung eines Synchronisiergliedes.

Patentanspruch 7, schließlich, betrifft die schaltungstechnische Ausgestaltung der Phasenvergleichsschaltung.

Anhand von 6 Figuren sollen nun Ausführungsbeispiele der Schaltungsanordnung nach der Erfindung ausführlich beschrieben und ihre Funktion erklärt werden.

Es zeigen:
- Fig. 1: die Anschaltung der Schaltungsanordnung nach der Erfindung in einer Richtfunk-Zwischenstelle,
- Fig. 2: ein erstes Ausführungsbeispiel der Schaltungsanordnung nach der Erfindung in allgemein funktionaler Darstellung,
- Fig. 3: ein zweites Ausführungsbeispiel in gleichartiger Darstellung,
- Fig. 4: Signalverläufe des ersten Ausführungsbeispiels,
- Fig. 5: Signalverläufe des zweiten Ausführungsbeispiels,
- Fig. 6: die schaltungstechnische Realisierung eines Ausführungsbeispiels.

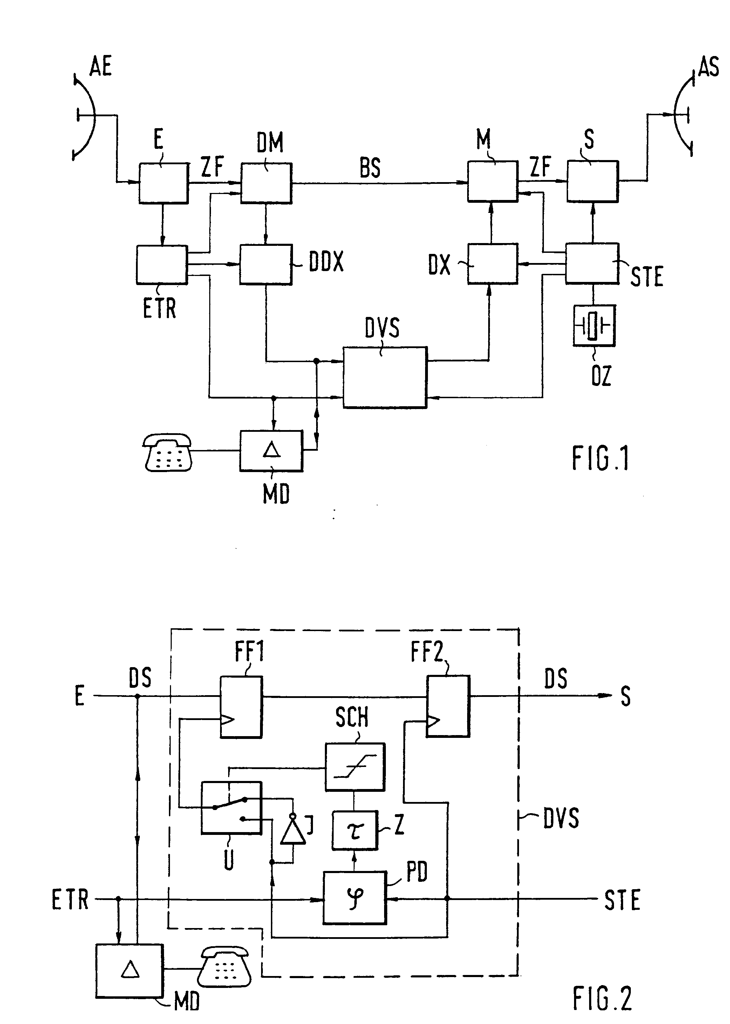

In Fig. 1 ist schematisch eine Zwischenstelle einer digitalen Richtfunkverbindung dargestellt. Das auf einen hochfrequenten Träger aufmodulierte, digitale Nutzsignal gelangt über eine Empfangsantenne AE auf einen Empfänger E. In diesem Empfänger wird das Nutzsignal in die Zwischenfrequenzebene ZF umgesetzt und einem Demodulator zugeführt, der aus dem ZF-Signal das Basisfrequenzsignal BS rückgewinnt. Dieses Basissignal wird der Sendeseite der Zwischenstelle übergeben. Es gelangt über einen Modulator M, der ein Zwischenfrequenzsignal ZF aufbereitet, auf einen Sender S, der es, auf einen hochfrequenten Träger aufmoduliert, über eine Sendeantenne AS ausgibt.

Demodulator und Modulator sind kompliziert aufgebaute, an die verwendete Modulationsart und den Aufbau des zu übertragenden Pulsrahmens angepaßte Schaltungen, die zum Betrieb einen Signaltakt benötigen. Dieser wird auf der Empfangsseite durch eine besondere Schaltung zur Empfangstaktrückgewinnung ETR aus dem empfangenen Signal wiedergewonnen. Auf der Sendeseite wird er in einer Sendetakterzeugungsschaltung STE, die in plesiochronen Systemen von einem quarzstabilisierten Oszillator OZ gesteuert wird, neu gebildet.

Die Signaltakte auf der Empfangsseite (Empfangstakt ET) und der Sendeseite (Sendetakt ST) sind meist nur annähernd synchron (plesiochron), da der Oszillator in der vorausgehenden Zwischenstelle in seiner Frequenz vom Oszillator OZ geringfügig abweicht. Der Modulator M enthält deshalb Schaltungen, die den übergebenen Pulsrahmen an den neuen Sendetakt anpassen.

Ein plesiochroner Betrieb kann durch synchronen Betrieb ersetzt werden, wenn der wiedergewonnene Empfangstakt zur Senderseite durchgeschaltet und anstelle eines eigenen Oszillatortaktes als Sendetakt verwendet wird. Die genannten Anpassungsschaltungen nehmen dann nur noch die Anpassung der Phasenlagen von Sende- und Empfangstakt vor.

Meist enthält der Pulsrahmen Hilfsbits, die einen oder mehrere digitale Dienstkanäle tragen. Solche Dienstkanäle werden zur Signalisierung und für Sprechverbindungen genutzt. Soll ein digitaler Dienstkanal auf einer Zwischenstelle zugänglich sein, z.B. eine Sprechverbindung von der Zwischenstelle aus über den Dienstkanal betrieben werden, so müssen die den Dienstkanal tragenden Hilfsbits aus dem Pulsrahmen empfängerseitig ausgefügt und senderseitig wieder eingefügt werden. Ersteres besorgt hier ein Dienstkanaldemultiplexer DDX, letzteres ein Dienstkanalmultiplexer DX. Der vom Dienstkanaldemultiplexer separierte digitale Dienstkanal kann z.B. mit Hilfe eines Delta-Modems MD für eine Sprechverbindung genutzt werden.

Um sprechen zu können, muß der Dienstkanal jedoch zur Senderseite durchverbunden werden. Dies kann im plesiochronen Betrieb wegen der auf der Empfangsseite und der Sendeseite unterschiedlichen Taktfrequenzen, im synchronen Betrieb wegen der auf der Empfangsseite und der Sendeseite unterschiedlichen, willkürlichen Phasenlagen der Takte, nicht direkt erfolgen, sondern es muß eine Anpassung des Dienstkanalsignals an den entsprechenden Sendetakt erfolgen.

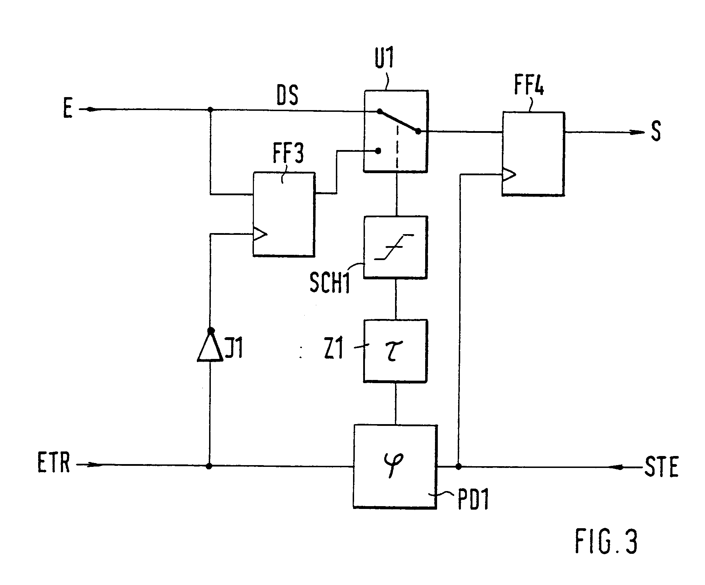

Hierzu ist in Fig. 1 eine Durchverbindungsschaltung DVS vorgesehen, auf die sich die Erfindung bezieht und von der Ausführungsbeispiele in Fig. 2 und Fig. 3 ausführlich dargestellt sind.

Die Durchverbindungsschaltung in Fig. 2 enthält einen ersten Zwischenspeicher FF1, dem das Dienstkanalsignal DS vom Empfänger E oder, falls die stationseigene Sprechverbindung in Betrieb ist, vom Delta-Modem MD bitweise eingegeben wird.

Dem ersten Zwischenspeicher wird an seinem Takteingang der von der Sendetakterzeugungsschaltung STE stammende Sendetakt ST zugeführt. Am Ausgang des ersten Zwischenspeichers erscheint dann ein mit dem Sendetakt synchronisiertes Signal, das jedoch fehlerbehaftet sein kann.

Der Grund für die entstehenden Fehler ist ein zeitliches Zusammenfallen der für die Einspeicherung und die Ausgabe maßgebenden Flanken des Empfangstaktes und des Sendetaktes.

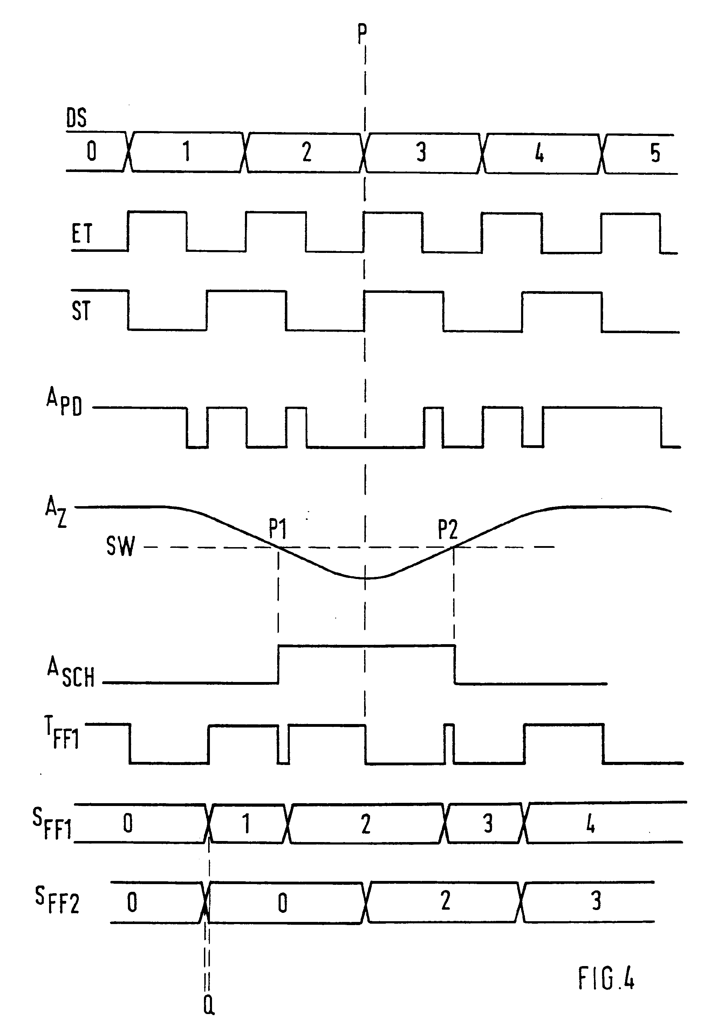

Dies läßt sich aus Fig. 4 erkennen:

Hier ist ganz oben die einlaufende Bitfolge 0 ... 5 des Dienstkanalsignals DS dargestellt. Diese wird synchron mit der positiven Flanke des Empfangstaktes ET am Eingang des Zwischenspeichers bereitgestellt. Die Ausgabe aus dem Zwischenspeicher erfolgt mit dem Sendetakt ST, der vom Empfangstakt, wie in Fig. 4 stark übertrieben dargestellt, verschieden ist. Zu einem Zeitpunkt P fallen die positiven Flanken der Takte zeitlich zusammen. An dieser Stelle ist unbestimmt, ob der Inhalt des Bit 2 oder bereits der des Bit 3 aus dem Zwischenspeicher ausgegeben wird. Da sich die Flanken der Takte in der Regel nur ganz langsam gegeneinander verschieben, kann hierdurch die Übertragung über einen längeren Zeitraum hinweg gestört sein. In der Praxis wird eine Sprechverbindung über mehrere Zwischenstellen hinweg hierdurch unmöglich.

Im synchronen Betrieb gibt es zwar keine Frequenzabweichung der Takte voneinander. Die gegenseitige Phasenlage der Takte, die sich nach jedem Einschalten eines Taktes neu und willkürlich einstellt, ist jedoch mit einer gewissen Wahrscheinlichkeit ungünstig, d.h. die beiden positiven Flanken der Takte liegen zeitlich nahe beieinander, so daß schon eine geringe zeitliche Streuung eines der Takte zu Störungen führt.

Die in Fig. 2 dargestellte Schaltungsanordnung enthält nun einen Umschalter U, der abhängig von der Phasenlage der beiden Takte zueinander angesteuert wird und den dem Zwischenspeicher FF1 zugeführten Sendetakt invertiert, sobald zwischen beiden Takten Phasengleichheit droht.

Letzteres wird von einer Phasenvergleichsschaltung PD, der die beiden Takte als Rechtecksignale mit einem Impuls-Pause-Verhältnis von 1:1 zugeführt werden, festgestellt. Die Phasenvergleichsschaltung steuert über einen Tiefpaß Z einen Schwellenwertschalter SCH an, der den Umschalter U betätigt. Zur Invertierung des Sendetaktes ist einem der Umschaltereingänge ein Inverter I vorgeschaltet.

Fig. 2 enthält noch einen weiteren Zwischenspeicher FF2 zur exakten Nachsynchronisation des am Ausgang des ersten Zwischenspeichers anstehenden Dienstkanalsignals mit dem Sendetakt. Vom Ausgang des weiteren Zwischenspeichers wird das Dienstkanalsignal DS zum Sender S der Zwischenstelle hin ausgegeben. Der Takteingang des weiteren Zwischenspeichers wird vom Sendetakt beaufschlagt.

In Fig. 4 ist schematisch die Wirkung der Durchverbindungsschaltung dargestellt. Die digital arbeitende Phasenvergleichsschaltung PD gibt ein Ausgangssignal A_{PD} aus, das z.B. H-Pegel annimmt, wenn die Pegel der beiden Takte zueinander antivalent sind und 0-Pegel annimmt, wenn die Takte gleiche Pegel aufweisen. Dieses Ausgangssignal wird durch den Tiefpaß geglättet und dem Schwellwertschalter als Steuersignal A_{Z} zugeführt. Überwiegen die phasengleichen Anteile der beiden Takte stark, so sinkt der Pegel des Steuersignals A_{Z} soweit ab, bis er zu einem Zeitpunkt P1 einen voreingestellten Schwellwert SW unterschreitet und damit die Umsteuerung des Umschalters durch das Ausgangssignal A_{SCH} des Schwellwertschalters bewirkt. Der Umschalter invertiert daraufhin den dem Zwischenspeicher zugeführten Sendetakt so lange, bis die zueinander gegenphasigen Teile von Empfangstakt und Sendetakt zu einem Zeitpunkt P2 wieder so weit zugenommen haben, daß ein zeitliches Zusammenfallen der maßgebenden Taktflanken nicht mehr wahrscheinlich ist.

Durch die Invertierung des Sendetaktes wird während der Zeit, in der die Umschaltung wirksam ist, der Inhalt der am Eingang des Zwischenspeichers FF1 anstehenden Bits mit der negativen Flanke des Sendetaktes auf den Zwischenspeicherausgang durchgeschaltet. Das am Takteingang des Zwischenspeichers FF1 anstehende Taktsignal T_{FF1} und die am Ausgang des Zwischenspeichers FF1 anstehende Bitfolge S_{FF1} sind in Fig. 4 ebenfalls wiedergegeben.

Bei der Nachsynchronisation, die mit demselben Takt wie die Ausspeicherung des Dienstkanalsignals aus dem Zwischenspeicher erfolgt, geht, wie das in Fig. 4 dargestellte Ausgangssignal S_{FF2} des weiteren Zwischenspeichers zeigt, ein Bit (z.B. Bit 1) verloren. Dies tritt jedoch nur bei plesiochronem Betrieb auf und führt zu Störungen, die sich bei Verwendung des Dienstkanals zur Sprachverbindung praktisch nicht bemerkbar machen. Bei synchronem Betrieb der Zwischenstelle ändert sich die Phase des dem Zwischenspeicher zugeführten sendeseitigen Taktes während des Betriebes nicht. Sie bleibt in der ursprünglichen Lage oder wird, wenn diese Lage ungünstig ist, von Anfang an invertiert.

Probleme beim Ausgeben des mit dem Sendetakt übernommenen Dienstkanalsignals aus dem weiteren Zwischenspeicher, wie man sie aufgrund der Gleichheit der verwendeten Takte und des damit verbundenen Synchronlaufs von Übernahme und Ausgabe erwarten könnte, treten deshalb nicht auf, weil der Übernahmetakt hier aufgrund längerer Laufzeit den ersten Zwischenspeicher etwas später erreicht als der dem zweiten Zwischenspeicher direkt zugeführte Ausgabetakt. Die beiden Takte weisen demnach, obgleich sie derselben Quelle entnommen sind, einen bleibenden Phasenunterschied auf, der Phasengleichheit, wie sie zwischen Empfangstakt und Sendetakt, wie oben beschrieben, auftreten kann, sicher verhindert. Die Darstellung in Fig. 4 läßt diesen Phasenunterschied im Zeitpunkt Q erkennen.

Das in Fig. 3 wiedergegebene Ausführungsbeispiel der Schaltungsanordnung nach der Erfindung weist ebenfalls einen Zwischenspeicher FF3 und einen Umschalter U1 auf, der von einer Phasenvergleichsschaltung PD1 über einen Tiefpaß Z1 und einen Schwellenwertschalter SCH1 angesteuert wird. Die Wirkungsweise der in Fig. 3 dargestellten Schaltungsanordnung unterscheidet sich jedoch von der des in Fig. 2 wiedergegebenen Ausführungsbeispiels. Während dort bei Phasengleichheit von Empfangstakt und Sendetakt der für die Ausgabe des Dienstkanalsignals aus dem Zwischenspeicher maßgebende Sendetakt invertiert wird, wird hier das Dienstkanalsignal auf einem ersten Signalweg direkt durchgeschaltet und auf einem zweiten Signalweg um eine halbe Taktperiode verzögert weitergegeben. Die Verzögerung wird mittels des Zwischenspeichers FF3 erreicht, dessen Takteingang der Empfangstakt über einen Inverter I1 zugeführt wird. Der Umschalter U1 schaltet auf den verzögernden Signalweg, wenn zwischen Sende- und Empfangstakt Phasengleichheit droht und stellt auf diese Weise einen Zeitversatz der Dienstkanalsignalbits her. Eine Nachsynchronisation erfolgt mittels eines zweiten Zwischenspeichers FF4.

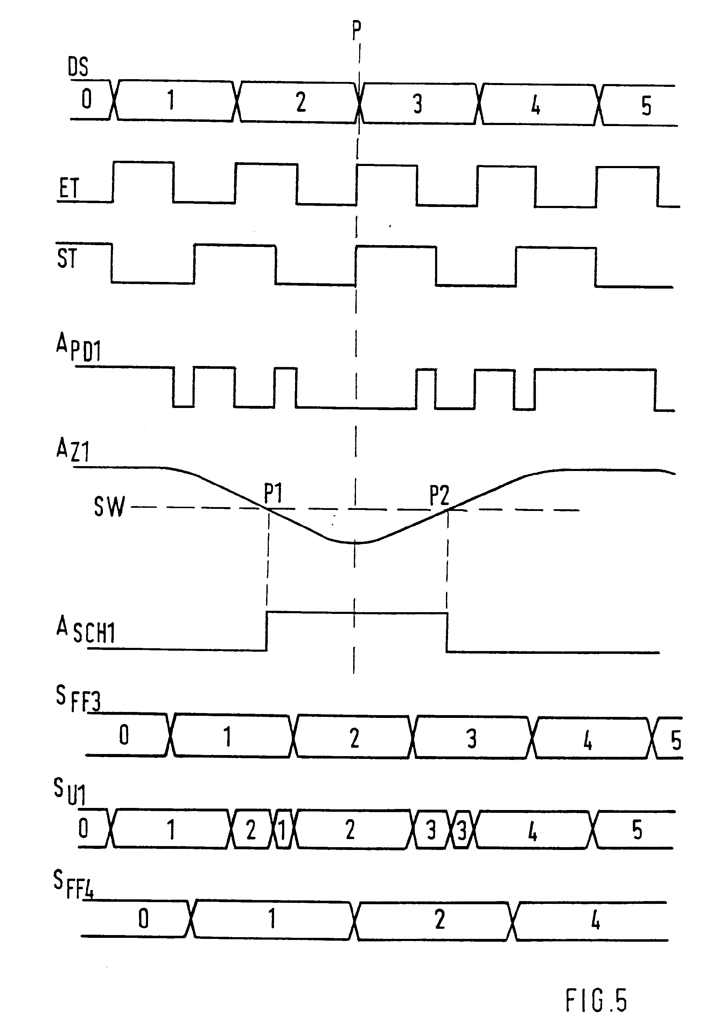

In Fig. 5 sind der Signalverlauf S_{FF3} am Ausgang des Zwischenspeichers FF3, der Signalverlauf S_{U1} am Ausgang des Umschalters und der Signalverlauf S_{FF3} am Ausgang des zweiten Zwischenspeichers FF4 zusammen mit den bereits im Zusammenhang mit Fig. 4 erläuterten Signalen DS, ET, ST, A_{PD1}, A_{Z1} und A_{SCH1} dargestellt. Es ist auch hier festzustellen, daß einzelne Bit (hier z.B. Bit 3) verloren gehen können.

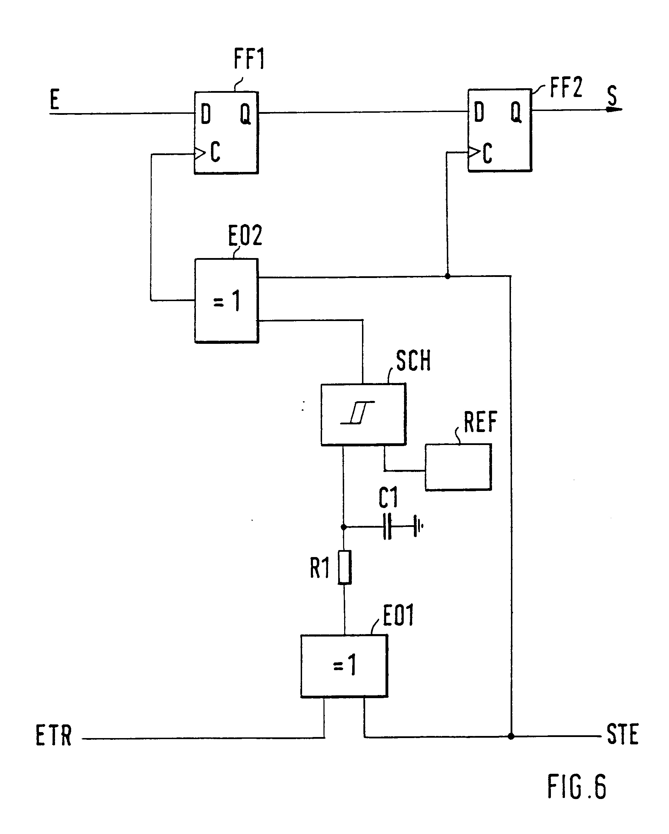

In Fig. 6, schließlich, ist die schaltungstechnische Umsetzung des Ausführungsbeispiels nach Fig. 2 wiedergegeben. Hier ist als Phasenvergleichsschaltung (PD in Fig. 2) und als Umschalter (U in Fig. 2) jeweils ein Exklusiv-Oder-Glied EO1 und EO2 eingesetzt. Der Tiefpaß (Z in Fig. 2) besteht aus einem einfachen, aus einem Widerstand R1 und einem Kondensator C1 gebildeten RC-Glied. Als Zwischenspeicher FF1 und FF2 werden D-Flipflops verwendet. Als Schwellwertschalter SCH dient ein Schmitt-Trigger mit von außen zugeführtem Referenzpotential REF.

## Patentansprüche

1. Schaltungsanordnung zur Durchschaltung eines von außen zugänglichen, durch Zusatzbits innerhalb eines digitalen Datensignals gebildeten digitalen Dienstkanals in einer Zwischenstelle eines Richtfunknetzes mit Einrichtungen zum empfangsseitigen Ausfügen und sendeseitigen Wiedereinfügen eines mit Hilfe der Zusatzbits übertragenen digitalen Dienstkanalsignals in das digitale Datensignal
**dadurch gekennzeichnet**, daß zum sendeseitigen Wiedereinfügen des digitalen Dienstkanalsignals im Rhythmus eines als Rechtecksignal mit vorgegebenem Impuls-Pause-Verhältnis vorliegenden Sendetaktes (ST) eine Ausgabesteuerschaltung vorgesehen ist, die, abhängig von dem Verhältnis der Phasenlage eines aus dem empfangenen Datensignal gewonnenen, ebenfalls als Rechtecksignal mit vorgegebenem Impuls-Pause-Verhältnis vorliegenden Empfangstaktes (ET) zu der Phasenlage des Sendetakts, vom Empfänger her einlaufende Dienstkanalsignalbits zeitlich versetzt.

2. Schaltungsanordnung nach Anspruch 1, dadurch gekennzeichnet, daß die Ausgabesteuerschaltung einen Zwischenspeicher (FF1) enthält, an dem das digitale Dienstkanalsignal (DS) mit dem Empfangstakt synchronisiert anliegt und aus dem es im Rhythmus des Sendetaktes (ST) bitweise wieder ausgegeben wird, daß ein Umschalter (U) vorgesehen ist, der den dem Zwischenspeicher zur Ausgabe des digitalen Dienstkanalsignals zugeführten Sendetakt (ST) entweder direkt oder über einen zwischengeschalteten Inverter (I) auf den Takteingang des Zwischenspeichers (FF1) schaltet, daß zur Ansteuerung des Umschalters (U) eine Phasenvergleichsschaltung (PD), ein nachgeschalteter Tiefpaß (Z) und ein Schwellwertschalter (SCH) vorgesehen sind und daß der Schwellwertschalter (SCH) den Umschalter (U) dann zur Zwischenschaltung des Inverters (I) veranlaßt, wenn die der Phasenvergleichsschaltung (PD) zugeführten Takte (ET, ST) über mehr als einen vorgegebenen Teil ihrer Taktperiode hinweg gleichphasig sind.

3. Schaltungsanordnung nach Anspruch 1, dadurch gekennzeichnet, daß die Ausgabesteuerschaltung einen Zwischenspeicher (FF3) enthält, in den das digitale Dienstkanalsignal (DS) im Rhythmus des Empfangstaktes (ET) bitweise eingegeben und phasenverschoben wieder ausgegeben werden kann, daß ein Umschalter (U1) vorgesehen ist, der das digitale Dienstkanalsignal entweder direkt oder vom Ausgang des Zwischenspeichers (FF3) aus auf ein nachgeschaltetes, mit dem Sendetakt (ST) getaktetes Synchronisierglied (FF4) durchschaltet, daß zur Ansteuerung des Umschalters (U1) eine Phasenvergleichsschaltung (PD1), ein dieser nachgeschalteter Tiefpaß (Z1) und ein Schwellwertschalter (SCH1) vorgesehen sind, und daß der Schwellwertschalter den Umschalter (U1) dann zur Durchschaltung des phasenverschobenen Dienstkanalsignals veranlaßt, wenn die der Phasenvergleichsschaltung (PD1) zugeführten Takte (ET, ST) über mehr als einen vorgegebenen Teil ihrer Taktperiode hinweg gleichphasig sind.

4. Schaltungsanordnung nach Anspruch 3, dadurch gekennzeichnet, daß dem Zwischenspeicher (FF3) zur Erzeugung einer Phasenverschiebung der Empfangstakt (ET) über einen dem Takteingang des Zwischenspeichers vorgeschalteten Inverter (I1) zugeführt wird.

5. Schaltungsanordnung nach Anspruch 2, dadurch gekennzeichnet, daß der Umschalter (U) durch ein Exklusiv-Oder-Glied (EO2) gebildet wird.

6. Schaltungsanordnung nach Anspruch 2 oder 5, dadurch gekennzeichnet, daß dem Zwischenspeicher (FF1) ein Synchronisierglied (FF2) nachgeschaltet ist, dessen Signaleingang das Ausgangssignal des Zwischenspeichers (FF1) und dessen Takteingang der Sendetakt (ST) zugeführt wird.

7. Schaltungsanordnung nach einem der Ansprüche 2-6, dadurch gekennzeichnet, daß die Phasenvergleichsschaltung (PD, PD1) durch ein Exklusiv-Oder-Glied (EO1) gebildet wird.

## Claims

1. Circuit arrangement for switching an externally accessible digital service channel, formed by additional bits inside a digital data signal in a repeater of a radio relay network, with installations on the receiving side for the removal and on the transmitting side for the reinsertion of a digital service channel signal transmitted with the aid of the additional bits into the digital data signal, characterized in that, to reinsert the digital service channel on the receiving side at the rate of a transmitting clock pulse (ST) existing in the form of a square-wave signal with a specified pulse-interval ratio, an output control circuit is provided which, as a function of the phase position ratio of a receiving clock pulse (ET) gained from the received data signal, which also exists as a square-wave signal with a specified pulse-interval ratio, time-shifts the service channel signal bits coming from the receiver to the phase position of the transmitting clock pulse.

2. Circuit arrangement according to claim 1, characterized in that the output control circuit contains a buffer (FF1), in which the digital service channel signal (DS) is synchronized with the receiving clock pulse, and from which it is reemitted in bits at the rate of the transmitting clock pulse (ST), that a change-over switch (U) is provided, which switches the transmitting clock pulse (ST) supplied to the buffer for the output of the digital service channel, either directly or through an intermediate inverter (I), to the pulse input of the buffer (FF1), that a phase comparison circuit (PD), a subsequent low-pass filter (Z) and a threshold switch (SCH) are provided to control the change-over switch (U), and that the threshold switch (SCH) then causes the change-over switch (U) to interpose the inverter (I), when the clock pulses (ET, ST) that are supplied to the phase comparison circuit (PD), are in-phase during more than a specified part of their clock pulse period.

3. Circuit arrangement according to claim 1, characterized in that the output control circuit contains a buffer (FF3), into which the digital service channel signal (DS) is inserted in bits at the rate of the receiving clock pulse (ET), and which can be reemitted with a phase shift, that a change-over switch (U1) is provided, which switches the digital service channel signal either directly, or from the buffer output (FF3), to a subsequent synchronizing element (FF4) that is pulsed by the transmitting clock pulse (ST), that a phase comparison circuit (PD1), a subsequent low-pass filter (Z1) and a threshold switch (SCH1) are provided to control the change-over switch (U1), and that the threshold switch causes the change-over switch (U1) to switch the phase-shifted service channel signal, when the pulses (ET, ST) that are supplied to the phase comparison circuit (PD1) are in-phase during more than a specified part of their clock pulse period.

4. Circuit arrangement according to claim 3, characterized in that, to create a phase shift, the receiving clock pulse (ET) is supplied to the buffer (FF3) through an inverter (I) located before the pulse input of the buffer.

5. Circuit arrangement according to claim 2, characterized in that the change-over switch (U) is formed by an exclusive-OR-element (EO2).

6. Circuit arrangement according to claim 2 or 5, characterized in that the buffer (FF1) is followed by a synchronizing element (FF2), whose signal input receives the output signal of the buffer (FF1), and its pulse input receives the transmitting clock pulse (ST).

7. Circuit arrangement according to one of claims 2-6, characterized in that the phase comparison circuit (PD, PD1) is formed by an exclusive-OR-element (EO1).

## Revendications

1. Circuit de transmission directe d'une voie numérique de service, accessible de l'extérieur et formée par des bits supplémentaires à l'intérieur d'un signal numérique de données, dans une station-relais d'un réseau hertzien, comportant des dispositifs pour extraire, côté réception, et réintroduire, côté émission, un signal numérique de voie de service, transmis à l'aide des bits supplémentaires, dans le signal numérique des données,
caractérisé par le fait que pour la réintroduction, côté émission, du signal numérique de la voie de service à la cadence d'une impulsion d'horloge d'émission (ST), qui se présente sous forme d'un signal rectangulaire avec un rapport impulsion-pause prescrit, est prévu un circuit de commande d'extraction qui, en fonction du rapport de la position de phase d'une impulsion d'horloge de réception (ET), obtenue à partir du signal de données reçu et se présentant également sous forme d'un signal rectangulaire d'un rapport d'impulsion-pause prescrit, par rapport à la position de phase de l'impulsion d'horloge de réception, décale dans le temps les bits du signal de la voie de service provenant du récepteur.

2. Circuit selon la revendication 1, caractérisé par le fait que le circuit de commande d'extraction contient une mémoire intermédiaire (FF1) dans laquelle arrive le signal numérique (DS) de la voie de service, synchronisé avec l'impulsion d'horloge de réception, et hors de laquelle il est extrait à nouveau, bit par bit, à la cadence de l'impulsion d'horloge d'émission (ST), par le fait qu'est prévu un commutateur (U) qui fait passer sur l'entrée d'impulsion d'horloge de la mémoire intermédiaire (FF1), soit directement, soit par l'intermédiaire d'un inverseur (I) monté en position intermédiaire, l'impulsion d'horloge d'émission (ST) amenée à la mémoire intermédiaire pour l'extraction du signal numérique de la voie de service, par le fait que, pour le pilotage du commutateur (U), sont prévus un circuit de comparaison de phase (PD), un filtre passe-bas (Z) monté en aval et un commutateur à valeur de seuil (FCH), et par le fait que la commutateur à valeur de seuil (SCH) fait en sorte que le commutateur (U) mette l'inverseur (I) en circuit intermédiaire lorsque les impulsions d'horloge (ET, ST), amenées au circuit de comparaison de phase (PD) sont en phase pendant plus d'une portion, prescrite, de leur période d'impulsion d'horloge.

3. Circuit selon la revendication 1, caractérisé par le fait que le circuit de commande d'extraction contient une mémoire intermédiaire (FF3) dans laquelle le signal numérique (DS) de la voie de service peut être entré bit par bit à la cadence de l'impulsion d'horloge de réception (ET) et d'où il peut d nouveau être extrait, décalé en phase, par le fait qu'est prévu un commutateur (U1) qui fait passer le signal numérique de la voie de service, soit directement, soit, de la sortie de la mémoire intermédiaire (FF3), sur un élément de synchronisation (FF4) monté en aval et cadencé par l'impulsion d'horloge d'émission (ST), par le fait que pour piloter le commutateur (U1) sont prévus un circuit (PD1) de comparaison de phase, un filtre passe-bas (Z1) monté en aval et un commutateur à valeur de seuil (SCH1), et par le fait que le commutateur à valeur de seuil fait en sorte que le commutateur (U) fasse passer le signal de la voie de service, décalé en phase, lorsque les impulsions d'horloge (ET, ST), amenées au circuit de comparaison de phase (PD1), sont en phase pendant plus d'une portion, prescrite, de leur période d'impulsion d'horloge.

4. Circuit selon la revendication 3, caractérisé par le fait qu'à la mémoire intermédiaire (FF3), prévue pour produire un déphasage, l'impulsion d'horloge de réception (ET) est amenée par l'intermédiaire d'un inverseur (I1) monté en amont de l'entrée d'impulsion d'horloge de la mémoire intermédiaire.

5. Circuit selon la revendication 2, caractérisé par le fait que le commutateur (U) est formé d'un élément OU exclusif (EO2).

6. Circuit selon la revendication 2 ou 5, caractérisé par le fait qu'en aval de la mémoire intermédiaire (FF1) est monté un élément de synchronisation (FF2) à l'entrée de signal duquel est amené le signal de sortie de la mémoire intermédiaire (FF1) et à l'entrée de signal d'horloge duquel est amenée l'impulsion d'horloge d'émission (ST).

7. Circuit selon l'une des revendications 2-6, caractérisé par le fait que le circuit de comparaison de phase (PD, PD1) est formé par un élément OU exclusif (EO1).
